# EUROPÄISCHE PATENTSCHRIFT

(11) **EP 2 032 331 B1**
(45) Veröffentlichungstag und Bekanntmachung des Hinweises auf die Patenterteilung: **18.04.2012**
(21) Anmeldenummer: 07730046.5
(22) Anmeldetag: 11.06.2007
(51) Int. Cl.: B29C 47/10, B29C 47/58, B29C 47/78, B29C 45/18, B29C 45/74, B29C 47/92

(54) **SCHNECKENPRESSE MIT EINER KÜHLEINRICHTUNG IN DER EINZUGSZONE**
WORM EXTRUDER COMPRISING A COOLING DEVICE IN THE FEED ZONE
EXTRUDEUSE À VIS AVEC UN DISPOSITIF DE REFROIDISSEMENT DANS LA ZONE D'ALIMENTATION

(30) Priorität: 27.06.2006 DE 102006029358
(43) Veröffentlichungstag der Anmeldung: 11.03.2009
(73) Patentinhaber: Sumitomo (SHI) Demag Plastics Machinery GmbH, 90571 Schwaig (DE)
(72) Erfinder: GRUNITZ, Otto, 90451 Nürnberg (DE)
(74) Vertreter: Hübner, Gerd
(86) Internationale Anmeldenummer: PCT/EP2007/055704
(87) Internationale Veröffentlichungsnummer: WO 2008/000613

(56) Entgegenhaltungen:
- DD-A5- 286 326
- DE-A1- 3 504 773
- DE-A1- 3 835 251
- GB-A- 521 889
- GB-A- 2 006 094
- GB-A- 2 366 540
- JP-A- 60 117 258

## Beschreibung

Die vorliegende Erfindung betrifft eine Schneckenpresse bzw. einen Extruder für die Verarbeitung von Kunststoffen und Kunststoffmischungen nach dem Oberbegriff von Anspruch 1.

Aus dem Stand der Technik ist bekannt, dass derartige Schneckenpressen einen Schneckenzylinder mit einer darin rotierend antreibbaren Schneckenwelle bzw. Schnecke aufweisen. Dabei weist der Schneckenzylinder in einem Endbereich eine Einzugsöffnung für die Zuführung von als Schüttgut vorhandenem Kunststoff oder Gemischen aus mehreren Kunststoffen und/oder Zuschlagstoffen, z.B. Naturfasern oder Mineral- bzw. Glasfasern und Pigmentstoffe, über einen Einfüllschacht auf.

Ferner ist aus dem Stand der Technik allgemein bekannt, dass Schneckenpressen für einen Einsatz als Extruder oder in einer Spritzgießmaschine zur Verarbeitung von thermoplastischen Werkstoffen über die Länge einer in ihnen angeordneten Extruderschnecke gesehen in drei Zonen aufgeteilt werden: Eine Einzugszone nimmt ein im Bereich der Einzugsöffnung zugeführtes schüttfähiges Material auf und fördert es unter Verdichtung und Erwärmung in eine Umwandlungszone. In der Umwandlungszone wird der schon vorverdichtete und angewärmte Werkstoff entgast, unter weiterer definierter Erwärmung weitgehend plastifiziert und homogenisiert. Das Material gelangt schließlich in eine Ausstoß-, Pump- bzw. Meteringzone, in der die ankommende Masse homogenisiert und in ein nachfolgendes Werkzeug gefördert wird.

In dem vorstehend grob skizzierten prinzipiellen Aufbau werden sogenannte Heizbänder an dem Schneckenzylinder außenseitlich angeordnet, um eine fortschreitende Beheizung des Fördergutes in definierter Art und Weise zu bewirken. Grundsätzlich kann dabei in den Bereich der Einzugsöffnung einer Kunststoff-Schneckenpresse unkontrolliert Wärme einfließen, die in anderen Bereichen des Schneckenzylinders aufgenommen wurde, insbesondere durch die Beheizung mit den i.d.R. elektrisch betriebenen Heizbändern. Zusätzlich wird jedoch auch durch das Transportieren und Vorverdichten des zugeführten Schüttgutes Wärme erzeugt. Jeder dieser Erwärmungseffekte kann im Bereich der Einzugsöffnung zu ganz erheblichen Störungen bei der Verarbeitung des Kunststoffes führen.

Es ist daher beispielsweise aus der DE 35 04 773 A1 bekannt, Extruder grundsätzlich nicht nur zu beheizen, sondern auch zu kühlen. Hierzu sind in einem an die Einzugsöffnung angrenzenden Abschnitt des Schneckenzylinders Kühleinrichtungen vorgesehen. Die Kühleinrichtung weist Kühlkanäle für die Führung eines fluiden Kühlmediums auf, beispielsweise Wasser. Der Schneckenzylinder ist dabei über seine gesamte Länge einstückig ausgeführt. Im Bereich der Kühleinrichtung besitzt der Schneckenzylinder einen Außenmantel mit gegenüber seiner übrigen Erstreckung reduziertem Außendurchmesser. In den Außenmantel sind schraubenwendelförmig umlaufende Kühlkanäle eingeschnitten. Auf diesen Außenmantel ist eine die Kühlkanäle abschließende Hülse aufgesetzt, die Bohrungen zur Kühlmittelein-und -abfuhr aufweist und mit dem Schneckenzylinder verschweißt ist.

Zur zusätzlichen Minderung einer axial gerichteten Wärmeleitung ist gemäß der Lehre der DE 35 04 773 A1 mindestens eine radial umlaufende sog. Wärmeleitungsunterbrechungsnut bzw. eine thermische Trenn-Nut vorgesehen, durch die ein wärmeleitender Querschnitt des Schneckenzylinders stark reduziert wird. Um eine Begrenzung des axialen Wärmestromes von den beheizten Bereichen des Schneckenzylinders in die Kühleinrichtung hinein und aus der Kühleinrichtung heraus in den Bereich der Einzugsöffnung hinein sind insbesondere jeweils mindestens eine thermischen Trenn-Nut vor und hinter der Kühleinrichtung vorgesehen

Aus der DE 32 27 443 A1 ist weiterhin bekannt, einen Bereich um die Einzugsöffnung als separates und mit dem übrigen Schneckenzylinder zu verbindendes Bauteil herzustellen, wobei zwischen Einzugsöffnung und Flanschbereich zu dem übrigen Schneckenzylinder hin Kühlkanäle vorgesehen sind, wobei dieses Bauteil nun separat in nicht weiter dargestellter Art und Weise wärmeisoliert ausgeführt ist.

Eine weitere Kühleinrichtung ist aus der DE 33 11 199 A1 bekannt, in der wiederum aufbauend auf einer Doppelwandbuchse Strömungskanäle für ein flüssiges Kühlmedium eingebracht werden. Hierzu wird der Schneckenzylinder nicht mehrteilig ausgeführt, sondern nur abschnittsweise als Doppelwandbuchse überdeckt. Der Strömungskanal für ein Kühlfluid wird von einem Kunststoffprofilband mit unterschiedlicher Form und Auflagefläche zwischen den Zylinderwänden der Doppelwandbuchse gebildet.

Bei einer in der DE 35 18 997 A1 offenbarten Lösung werden Zwischenringe, die in einem zusammengebauten Zustand einen Ringkanal aufweisen, mit Umlenkeinrichtungen als Kühlkanäle aufweisende Einheit mit dem Schneckenzylinder lösbar verbunden, um ein Auswechseln verschlissener Zylinderteile zu ermöglichen und das Kühlsystem wiederverwenden zu können.

Ein Nachteil dieser bekannten Lösung liegt in einem jeweils relativ hohen fertigungstechnischen Aufwand für die Kühleinheit. Ebenfalls kann es bei längerem Betreiben derartiger Kühleinheiten zu Ablagerungen in den Kühlkanälen kommen, die den Gesamtwirkungsgrad beeinträchtigen. Deshalb müssen meist aufwändige Anlagen für den Kühlkreislauf und eine Aufbereitung des Kühlmediums vorgesehen und ständig betrieben werden. Derartige Anlagen sind dem Fachmann zwar hinlänglich bekannt, da als Kühlmedium i.d.R. große Mengen an Wasser zum Einsatz kommen, um im Bereich der Einzugsöffnung eine Temperatur von 40°C bis 80°C halten zu können. Ein entsprechender Korrosionsschutz für die wasserführenden Teile sowie eine Abdichtung und ein Spritzschutz der übrigen elektrischen Einrichtungen im Bereich der gesamten Schneckenpresse ist jedoch in der Anschaffung kosten-, und im Betrieb energieintensiv.

Aus der WO 2006/073107 A1 ist eine Schneckenpresse bekannt, in der in einem Schneckenzylinder eine rotierend antreibbare Schneckenwellen aufgenommen ist. Dabei weist der Schneckenzylinder in einem Endbereich eine Einzugsöffnung für die Zuführung von als Schüttgut vorhandenem Kunststoff und/oder Zuschlagsstoffen über einen Einfüllschacht auf. In einem an die Einzugsöffnung angrenzenden Abschnitt des Schneckenzylinders ist eine Kühleinrichtung mit thermoelektrischen Kühlelementen vorgesehen.

In der DD 286 326 A5 ist ein Extruder beschrieben, der in einem an den Einzugsschacht grenzenden Abschnitt über eine Kühlung mittels Kühlrippen verfügt. Im Bereich des Einfüllschachtes sind Peltier-Elemente vorgesehen, welche an die Einzugsöffnung angrenzen.

Problematisch ist dabei ein Wärmestrom von den Heizeinrichtungen in Richtung des Einfüllschachtes, der zur Erwärmung des zugeführten Material führt.

Aus der GB 2 366 540 A ist eine Schneckenpresse für eine Spritzgießmaschine bekannt, bei der eine Kühleinrichtung im Bereich des Einfülltrichters für das granulatförmige Material vorgesehen ist. Die Kühlung wird dabei durch Kaltgas erzeugt, das durch den Hohlraum des Einfülltrichters geleitet wird.

Diese Art von Kühleinrichtung für das zuzuführende Gut ist außerordentlich aufwendig, da Fünrungsleitungen für das Kaltgas, entsprechende Kältegeneratoren und Steuereinrichtungen vorgesehen sind. Dieser Aufwand wird getrieben, da bei diesem Stand der Technik insbesondere sehr wärmeempfindliche Wachsgranulate in der Spritzgießmaschine verarbeitet werden sollen.

Es ist Aufgabe der vorliegenden Erfindung, eine Schneckenpresse der genannten Art bei Steigerung der Effizienz einer Kühlung unter Senkung der Betriebskosten und Erhöhung der Betriebszuverlässigkeit weiterzubilden.

Diese Aufgabe wird durch die Merkmale des unabhängigen Anspruches 1 gelöst. Vorteilhafte Weiterbildungen sind Gegenstand der jeweiligen Unteransprüche.

Konstruktionsgemäß zeichnet sich eine Schneckenpresse mit Schneckenzylinder und darin rotierend antreibbarer Schneckenwelle, bei der der Schneckenzylinder in einem Endbereich eine Einzugsöffnung für die Zuführung von als Schüttgut vorhandenem Kunststoff oder Gemischen aus mehreren Kunststoffen und/oder Zuschlagstoffen über einen Einfüllschacht aufweist und in einem an die Einzugsöffnung angrenzenden Abschnitt des Schneckenzylinders mindestens eine Kühleinrichtung vorgesehen ist, dadurch aus, dass im Bereich des Einfüllschachts eine aktive Wärmebarriere vorgesehen ist, die elektrisch regelbare Mittel zum Wärmeabtransport aufweist. Damit nutzt die Erfindung die Erkenntnis, dass Plastifiziereinheiten mit einer in Transportrichtung eines Fördergutes gesehen an die Einzugsöffnung anschließenden Kühlzone einem Verklumpen eines zugeführten Granulats durch mindestens teilweises Aufschmelzen beim Eintritt in den Plastifizierzylinder nicht ausreichend entgegenwirken können. Ein gleichbleibender Abtransport bzw. Fluss von Granulat ist unter Beibehaltung einer vorgegebenen Granulat-Korngröße für einen störungsfreien Betrieb einer Schneckenpresse zur Verarbeitung thermoplastischer Kunststoffe von entscheidender Bedeutung. Die Qualität eines Spritzgusserzeugnisses hängt ganz wesentlich davon ab, dass an einem Ausgang der Spritz-Guss-Maschine konstante Parameter im Materialfluss herrschen. Hierfür ist ein kontinuierlicher Transport des Fördergutes bereits im Bereich des Einfüllschachts eine wesentliche und bislang unterschätzte Voraussetzung. Durch eine aktive Wärmebarriere im Bereich des Einfüllschachts wird sowohl eine Eigenerwärmung z.B. durch Reibung beim Materialeinzug und vorverdichtendem Transport, als auch ein sonst unkontrollierter Zufluss von Wärme aus angrenzenden Bereichen des Schneckenzylinders effektiv begrenzt. Damit wird in einer erfindungsgemäßen Schneckenpresse bereits im Bereich des Einfüllschachts durch Kühlung im Betrieb eine Temperatur aufrechterhalten, bei der ein durch teilweises An- oder Aufschmelzen hervorgerufenes Verklumpen des Granulates im Wesentlichen unterbleibt.

Erfindungsgemäß weist die Wärmebarriere eine thermische Isolation auf. Diese Isolation hindert einen insbesondere von den Heizbändern stammenden Wärmestrom an einer Erwärmung des im Bereich des Einfüllschachts befindlichen Materials. Zur radial geschlossenen Abschirmung ist die thermische Isolation hülsenförmig ausgebildet. Dabei hat es sich bei einer weiteren Ausführungsform der Erfindung als vorteilhaft herausgestellt, dass die thermische Isolation zylindrisch ausgebildet ist und an ihrer Innenseite eine gut thermisch leitende Schicht aufweist. Durch diese thermisch leitende Schicht, die z.B. aus Kupferblech oder evakuiertem Edelstahl o.ä. bestehen kann, wird eine vereinheitlichte Verteilung der Kühlleistung und ein Wärmeabtransport aus einem Innenraum des Einfüllschachts erreicht.

In einer bevorzugten Ausführungsform der Erfindung ist besonders vorteilhaft, dass die Wärmebarriere mindestens ein Peltier-Element umfasst. Peltier-Elemente sind thermoelektrische Bauelemente mit geringem Raumbedarf, die nachfolgend als Wärmepumpen zum Ersatz bekannter Kompressor- und Absorberkühlsysteme eingesetzt werden. Bei einem Peltier-Element handelt es sich um ein Halbleiter-Bauelement, das proportional zu einem Stromfuß eine Temperaturdifferenz zwischen zwei Außen- bzw. Oberflächen erzeugt. Die durch ein Peltier-Element erreichbare Temperaturdifferenz ist über den Stromfluss durch das Peltier-Element hindurch einfach zu regeln. Der Wirkungsgrad eines Peltier-Elements beträgt ca. 33%, wobei diese Elemente bis zu Temperaturen von ca. 200°C einsetzbar sind. Dabei sind Peltier-Elemente von bis zu 240 W Leistung am Markt verfügbar. Eine jeweils resultierende Temperaturdifferenz eines Peltier-Elements ergibt sich zu ΔT ≈ 60 K. Eine Anordnung von Peltier-Elementen kann in unterschiedlicher Weise erfolgen, insbesondere kaskadiert in Reihen- und/oder Parallelschaltungen, wie auch nachfolgend unter Bezugnahme auf Abbildungen von Ausführungsbeispielen anhand der Zeichnung noch beschrieben wird. Unter Beachtung einer maximalen Außentemperatur von ca. 200°C können durch Kaskadenschaltung von n Peltier-Elementen also Temperaturdifferenzen von ΔT ≈ n*60 K erzielt werden.

In einer besonders bevorzugten Ausführungsform der Erfindung ist in einer thermischen Trenn-Nut eine aktive Wärmebarriere vorgesehen. Diese aktive Wärmebarriere weist elektrisch regelbare Mittel zum Wärmeabtransport und insbesondere mindestens ein Peltier-Element auf. Da die in der thermischen Trenn-Nut angeordnete aktive Wärmebarriere im Einsatz an einem Schneckenzylinder eine einem Wärmestrom Q zugewandte Seite aufweist, wird zudem bevorzugt, an dieser Seite eine thermische Isolation anzuordnen. Vorzugsweise weist eine in der thermischen Trenn-Nut angeordnete aktive Wärmebarriere jedoch an ihren beiden Längsseiten je eine thermische Isolation auf.

Ferner wird bevorzugt, dass an einer freien nach außen orientierten Oberfläche der aktiven Wärmebarriere Kühlbleche, Kühlkörper oder ähnliche Vorrichtungen zur Verbesserung mindestens eines konvektiven Wärmeübergangs angeordnet sind, und ggf. auch der Wärmeabstrahlung.

Weitere Merkmale und Vorteile der Erfindung werden nachfolgend unter Beschreibung von Ausführungsbeispielen mit Bezugnahme auf die Abbildungen der Zeichnung angegeben. In der Zeichnung zeigen:
- Figur 1:: eine schematisierte Schnittzeichnung eines prinzipiellen Aufbaus einer Schneckenpresse unter Andeutung von Wärmeströmen mit einer aktiven Wärmebarriere gemäß einer ersten Ausführungsform;
- Figur 2:: eine analog der Abbildung von Figur 1 schematisierte Schnittzeichnung eines prinzipiellen Aufbaus einer Schneckenpresse mit einer Kühleinrichtung nach dem Stand der Technik;
- Figur 3:: ein skizzierter Längsschnitt durch eine Ausführungsform eines Einfüllschachts mit aktiver Wärmebarriere und einer gut thermisch leitenden Schicht;
- Figur 4:: ein skizzierter Ausschnitt aus der aktiven Wärmebarriere von Figur 3 mit eingezeichnetem Temperaturverlauf;
- Figur 5:: ein skizzierter Längsschnitt durch eine weitere Ausführungsform eines Einfüllschachts einer Plastifiziereinheit mit aktiver Wärmebarriere, thermischer Isolation und einer gut thermisch leitenden Schicht;
- Figur 6:: eine Draufsicht auf den Einfüllschacht in der Ausführungsform gemäß Figur 5;
- Figur 7:: ein skizzierter Längsschnitt durch einen Bereich des Schneckenzylinders zwischen Plastifiziereinheit und erstem Heizband unter prinzipieller Darstellung eines Wärmeflusses im Bereich einer thermischen Trenn-Nut mit zugehörigem Temperaturverlaufsdiagramm und
- Figur 8:: ein Schaltbild einer Regelschaltung zu einer Schneckenpresse mit aktiven Wärmebarrieren an einem Einfüllschacht gemäß Figur 5 und in einer thermischen Trenn-Nut gemäß Figur 7.

Über die verschiedenen Abbildungen und Ausführungsbeispiele hinweg werden nachfolgend einheitlich gleiche Bezugsziffern und Bezeichnungen für gleiche Teile, Funktions- oder Baugruppen und Verfahrensschritte verwendet.

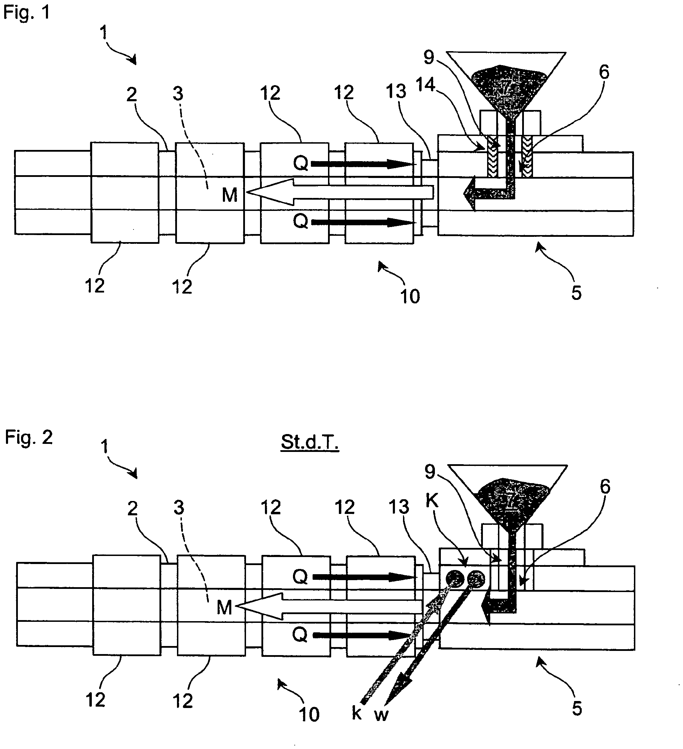

Figur 1 zeigt in schematisierter Darstellung als Schnittzeichnung einen prinzipiellen Aufbau einer Schneckenpresse 1 mit Schneckenzylinder 2 und eine darin über einen nicht weiter dargestellten Antrieb rotierend antreibbare Schneckenwelle 3. Der Schneckenzylinder 2 weist in einem Endbereich, der sog. Plastifiziereinheit 5, eine Einzugsöffnung 6 für die Zuführung von als Schüttgut 7 vorhandenem Kunststoff oder Gemischen aus mehreren Kunststoffen und/oder Zuschlagstoffen über einen Einfüllschacht 9 in eine Einzugszone auf. Von dort wird das schüttfähige Material 7 unter Verdichtung und Erwärmung in eine Umwandlungszone 10 gefördert. Im Bereich der Umwandlungszone sind am Schneckenzylinder 2 elektrische Heizbänder 12 angeordnet, die zu diesem Zweck Wärme durch den Schneckenzylinder 2 in einen Materialstrom M einleiten. Dabei bildet sich jedoch auch ein Wärmestrom Q aus, der zur Plastifiziereinheit 5 hin gerichtet ist und dort für eine ausreichend hohe Erwärmung sorgen kann, um das in definierter Korngröße zugeführte schüttfähige Material 7 anzuschmelzen. Das kann zu Verklumpungen einzelner Körner bis hin zu Verstopfungen im Bereich der Einzugsöffnung 6 führen, in jedem Fall jedoch über eine ungleichmäßigere Materialzufuhr zu Schwankungen in einer Zykluszeit und damit zu deutlichen Parameterabweichungen im Ausgangsprodukt an einem nachfolgenden Werkzeug.

Aus dem Stand der Technik sind verschiedene Maßnahmen bekannt, um eine derartige Verschlechterung der Qualität des Materialstroms M an einem Ausgang der Schneckenpresse 1 einzudämmen. Zur Begrenzung der unerwünschten Wärmeleitung ist im Übergang zwischen einem letzten Heizband 12 der Umwandlungszone 10 eine sog. Wärmeleitungsunterbrechungsnut 13 vorgesehen. Diese Wärmeleitungsunterbrechungsnut 13 wird auch als Wärmeisolationsnut oder thermische Trenn-Nut 13 bezeichnet. Sie dient als umlaufend geschlossene Nut bzw. Materialverjüngung zur konstruktiven Begrenzung von Material, das zur Wärmeleitung zur Verfügung steht.

Weiter ist bereits aus dem Stand der Technik bekannt, dass in einem an die Einzugsöffnung 6 angrenzenden Abschnitt des Schneckenzylinders 1 mindestens eine Kühleinrichtung K angeordnet wird. Wie in Figur 2 unter Andeutung von Wärmeströmen Q dargestellt, handelt es sich hierbei um eine Wasserkühlung mit einem Kaltwasser-Zulauf k und einem Warmwasser-Ablauf w als Gegenstromwärmetauscher. Ein zusätzlicher Aufwand an Korrosionsschutz und Abdichtung der mit hohen Stromstärken betriebenen übrigen Einrichtungen an einer Schneckenpresse ist dem Fachmann bekannt und wird daher an dieser Stelle nur mit dem Hinweis auf die für eine ausreichende Kühlung erforderlichen großen Wassermengen angedeutet.

In dem erfindungsgemäßen Ausführungsbeispiel gemäß Figur 1 ist im Gegensatz zu Vorrichtungen nach dem Stand der Technik, wie sie in Figur 2 prinzipiell dargestellt sind, in einem Bereich des Einfüllschachts 9 eine aktive Wärmebarriere 14 vorgesehen. Eine derartige Wärmebarriere 14 umfasst als elektrisch aktive Bauteile sog. Peltier-Elemente 16. Damit wird bereits im Bereich des Einfüllschachtes 9 eine Kühlung bewirkt, die auch eine im Zuge der Materialförderung erzeugte Wärme effektiv abführen kann, um so Verklumpungen im Schüttgut 7 vorzubeugen.

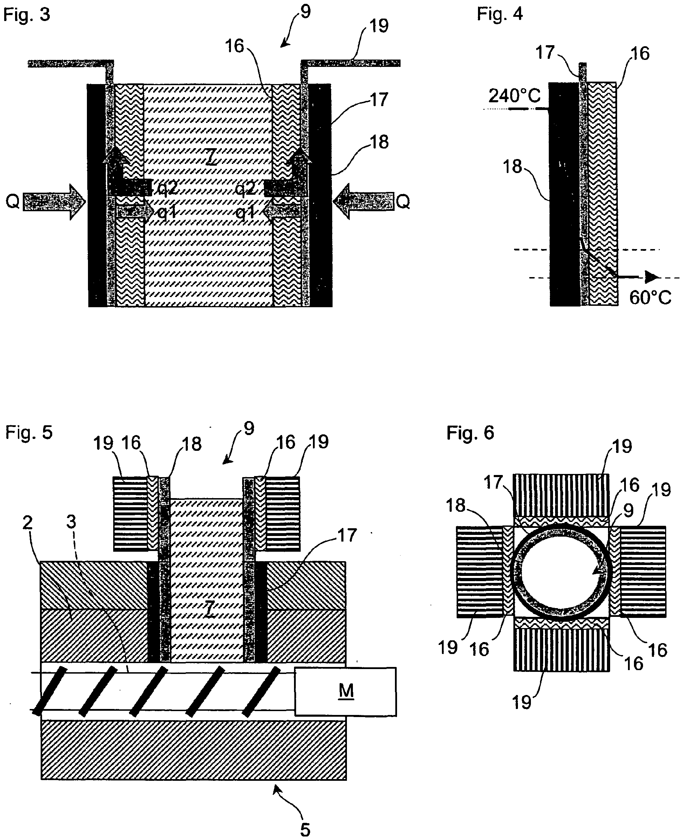

Figur 3 stellt einen skizzierten Längsschnitt durch eine Ausführungsform eines Einfüllschachts 9 mit einer aktiven Wärmebarriere 14 dar, die hülsenförmig ausgebildet ist und an einer Zylinderinnenfläche mit einer thermisch gut leitenden Schicht 17 und an einer Zylinderaußenfläche mit einer thermischen Isolationsschicht 18 versehen ist. Peltier-Elemente 16 sind als elektrisch regelbare Mittel zum Wärmeabtransport bekannt, wobei ein jeweilig ableitbarer Wärmestrom q2 über einen Stromfluss I durch das Peltier-Element 16 regelbar ist. Als flächig oder gebogen ausgeführte Bauteile werden sie hier in thermischem Kontakt mit der gut leitenden Schicht 17 zum Abtransport eines Wärmestroms q2 thermisch verbunden. Nach außen hin ist die Anordnung durch die thermische Isolationsschicht 18 umschlossen. Damit gelangt nicht mehr der volle Wärmestrom Q in das Schüttgut 7. Die leitende Schicht 17 bewirkt durch Anbindung an den konvektiv arbeitenden Kühlkörper 19 eine zusätzliche passive Kühlung. Ein sich ergebendes Temperaturgefälle ist in Figur 4 skizziert: Von einer Maximaltemperatur von ca. 240°C wird auf eine Temperatur von etwa 60°C im Bereich des Schüttgutes 7 durch aktive und passive Maßnahmen abgekühlt. Eine erste deutliche Temperaturabsenkung erfolgt durch die Isolationsschicht 18. Einen nächsten Schritt zur Temperaturabsenkung bewirken die leitende Schicht 17 und die Peltier-Elemente 16 zusammen. Dieses Ausführungsbeispiel benötigt vergleichsweise wenig Energie, um eine Solltemperatur zu garantieren.

Eine Variation der Ausführungsbeispiele der Figuren 3 und 4 ist in Figur 5 wiederum als skizzierter Längsschnitt durch eine weitere Ausführungsform dargestellt. Hierbei wurden kommerziell erhältliche Bauformen von Peltier-Elementen 16 in einer abgewandelten Bauform eines Einfüllschachts einer Plastifiziereinheit mit aktiver Wärmebarriere 14, thermischer Isolation 18 und einer gut thermisch leitenden Schicht 17 eingesetzt. Im Bereich des Schneckenzylinders 2 ist eine thermisch isolierende Hülse angeordnet, die hier aus Keramik besteht. Zum eigentlichen Einfüllschacht 9 hin ist dann die thermisch leitende Schicht 17 angeordnet, die über die Wandstärke des Schneckenzylinders 2 hinaus verlängert ist. Außerhalb des Schneckenzylinders 2 sind nun Peltier-Elemente 16 in handelsüblicher Plattenbauform als einzelne Module angeordnet, die zur Wärmeabgabe mit Kühlkörpern 19 verbunden sind. Figur 6 zeigt eine entsprechende Draufsicht auf den Einfüllschacht 9 der Ausführungsform gemäß Figur 5.

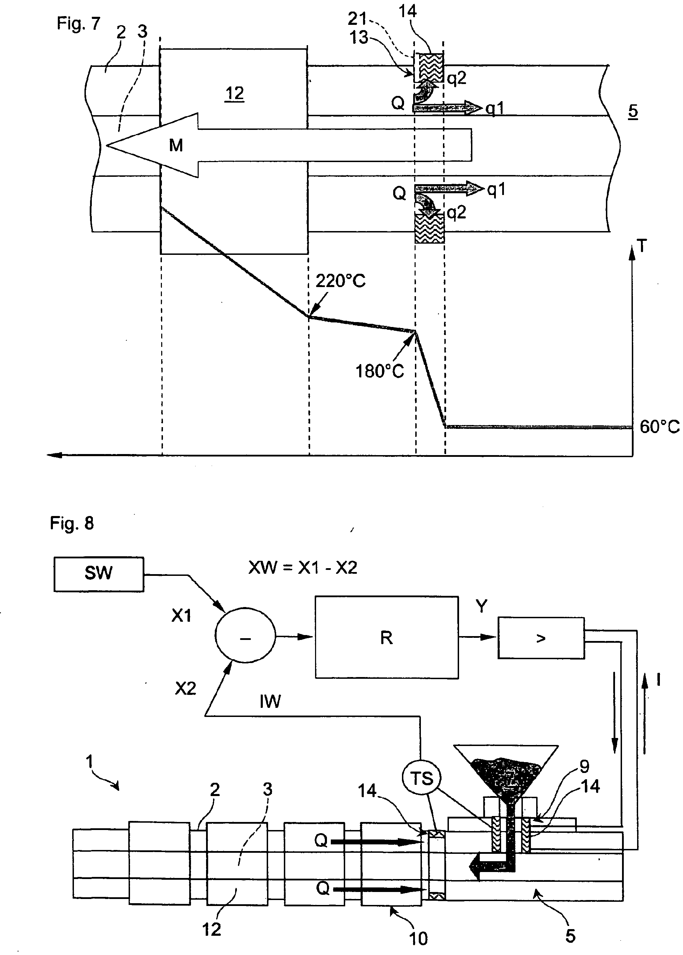

Figur 7 zeigt einen skizzierten Längsschnitt durch einen Bereich des Schneckenzylinders 2 zwischen Plastifiziereinheit 5 und erstem Heizband 12 unter prinzipieller Darstellung eines Wärmeflusses im Bereich der thermischen Trenn-Nut 13 mit zugehörigem Temperaturverlaufsdiagramm. Demnach weist der Schneckenzylinder 2 hinter dem Heizband 12 eine Temperatur von ca. 220°C auf, die über Wärmeabgabe an den Massenfluss M und Abstrahlung zu der thermischen Trenn-Nut 13 hin auf ca. 180°C abgesunken ist. In der thermischen Trenn-Nut 13 ist nun ebenfalls eine aktive Wärmebarriere 14 angeordnet. Diese aktive Wärmebarriere 14 ist in Form eines Rings aus Peltier-Elementen 16 ausgebildet, durch den ein Teilstrom q1 abgepumpt wird, so dass nur noch ein Teilstrom q2 zur Plastifiziereinheit 5 weitergeleitet werden kann. Im Anschluss der Umwandlungszone an die Einzugszone herrscht damit nur noch eine Temperatur von ca. 60°C. Dieses Ausführungsbeispiel benötigt zwar prinzipiell mehr elektrische Energie als das Ausführungsbeispiel nach Figur 2, beeinflusst jedoch bei Änderung der Einfüllzonentemperatur die Mantelheizzone nur unwesentlich. Analog der Vorrichtung der Figuren 3 und 5 kann dem Peltier-Element 16 noch eine thermische Isolationsschicht 21 in der skizziert eingezeichneten Art und Weise in der Nut 13 vorgeschaltet werden.

Figur 8 stellt ein Schaltbild einer Regelschaltung einer Schneckenpresse 1 mit aktiven Wärmebarrieren 14 an einem Einfüllschacht 9 gemäß Figur 5 und in einer thermischen Trenn-Nut 13 gemäß Figur 7 dar. Beide aktiven Wärmebarrieren 14 werden mit einem Temperatursensor TS überwacht, dessen Ausgangsgröße X2 als Istwert IW mit der Größe X1 eines Sollwertes SW verglichen wird. Eine Regelabweichung XW = X1 - X2 wird einem Regler zur Ausgabe eines Regelsignals y zugeführt, das von einem Verstärker als elektrischer Strom an eine oder beide aktiven Wärmebarrieren 14 ausgegeben wird.

Bei jeder der vorstehend dargestellten Ausführungsbeispiele der Erfindung ist vorteilhafterweise im Bereich der Plastifiziereinheit 5 kein Kühlwasser notwendig. Damit besteht wenigstens an dieser Stelle keine Gefahr, einen Kurzschluss an den Heizbändern durch auslaufendes Wasser zu erzeugen. Ferner arbeitet eine vorstehend dargestellte Kühlung einer Einfüllzone absolut unabhängig vom lokalen Wasserdruck, was insbesondere für Länder in Asien von Bedeutung ist. Dabei tritt vorzugsweise auch keinerlei Betauung der Plastifiziereinheit mit entsprechender Rostbildung an der Maschine auf. Gegenüber bekannten Anlagen sind damit insgesamt wesentlich weniger Schlauchleitungen zu verlegen. Durch ersatzlosen Wegfall von Kühlplatten, Ventilblöcken und Verschlauchungen und Einsatz preiswerterer Peltier-Kühler mit entsprechenden Kühlkörpern, thermischen Leitflächen und Isolationen sowie einem Schaltverstärker können auch bei Aufbau einer erfindungsgemäßen Schneckenpresse gegenüber bekannten Vorrichtungen noch Einsparpotentiale realisiert werden.

### Bezugszeichenliste

- 1: Schneckenpresse
- 2: Schneckenzylinder
- 3: Schneckenwelle
- 4:
- 5: Plastifiziereinheit
- 6: Einzugsöffnung
- 7: Schüttgut
- 8:
- 9: Einfüllschacht
- 10: Umwandlungszone
- 11:
- 12: Heizband
- 13: thermische Trenn-Nut
- 14: aktive Wärmebarriere
- 15:
- 16: Peltier-Element
- 17: thermisch gut leitende Schicht
- 18: thermische Isolationsschicht
- 19: Kühlkörper für Wärmeabgang über freie Konvektion
- 20:
- 21: thermische Isolationsschicht

- M: Materialfluss
- Q: Wärmefluss
- k: Kaltwasser-Zulauf
- w: Warmwasser-Ablauf
- q1: Teil-Wärmestrom
- q2: Teil-Wärmefluss
- SW: Sollwert
- IW: Istwert
- X1: Größe des Sollwerts
- X2: Größe des Istwerts
- XW: Regelabweichung
- R: Regler
- TS: Temperatursensor
- I: elektrischer Strom

## Patentansprüche

1. Schneckenpresse (1) mit Schneckenzylinder (2) und darin rotierend antreibbarer Schneckenwelle (3), wobei der Schneckenzylinder (2) in einem Endbereich eine Einzugsöffnung (6) für die Zuführung von als Schüttgut (7) vorhandenem Kunststoff oder Gemischen aus mehreren Kunststoffen und/oder Zuschlagstoffen über einen Einfüllschacht (9) aufweist,
in einem an die Einzugsöffnung (6) angrenzenden Abschnitt des Schneckenzylinders (2) mindestens eine Kühleinrichtung (K) vorgesehen ist **dadurch gekennzeichnet, dass**
im Bereich des Einfüllschachts (9) eine aktive Wärmebarriere (14) vorgesehen ist, die elektrisch regelbare Mittel zum Wärmeabtransport aufweist, und
die Wärmebarriere (14) eine thermische Isolation (18) aufweist, die hülsenförmig an einer Außenseite der Wärmebarriere (14) ausgebildet ist.

2. Schneckenpresse nach Anspruch 1,
**dadurch gekennzeichnet, dass** die thermische Isolation (18)
als keramisches Element ausgebildet ist.

3. Schneckenpresse nach Anspruch 1 oder 2, **dadurch gekennzeichnet, dass** die Wärmebarrieren (14) mindestens ein Peltier-Element (16) umfasst.

4. Schneckenpresse nach einem der vorhergehenden Ansprüche, **dadurch gekennzeichnet, dass** die Wärmebarriere (14) zu einer Wandung des Einfüllschachts (9) eine gut thermisch leitende Schicht (17) aufweist.

5. Schneckenpresse nach einem der vorhergehenden Ansprüche, **dadurch gekennzeichnet, dass** die thermische Isolation (18) zylindrisch ausgebildet ist und an ihrer Innenweite eine gut thermisch leitende Schicht (17) aufweist.

6. Schneckenpresse nach Anspruch 4, **dadurch gekennzeichnet, dass** die gut thermisch leitende Schicht (17) aus Kupfer oder evakuiertem Edelstahl besteht.

7. Schneckenpresse nach einem der vorhergehenden Ansprüche, **dadurch gekennzeichnet, dass** in einer thermischen Trenn-Nut (13) zwischen der Umwandlungszone (10) und der Plastifiziereinheit (5) der Schneckenpresse (1) eine aktive Wärmebarriere (14) vorgesehen ist, die elektrisch regelbare Mittel zum Wärmeabtransport und insbesondere mindestens ein Peltier-Element (16) aufweist.

8. Schneckenpresse nach dem vorhergehenden Anspruch, **dadurch gekennzeichnet, dass** die in der thermischen Trenn-Nut (13) angeordnete aktive Wärmebarriere (14) mindestens auf einer im Einsatz einem Wärmestrom (Q) zugewandten Seite eine thermische Isolation (21) aufweist.

9. Schneckenpresse nach dem vorhergehenden Anspruch, **dadurch gekennzeichnet, dass** die in der thermischen Trenn-Nut (13) angeordnete aktive Wärmebarriere (14) an beiden Längsseiten je eine thermische Isolation (21) aufweist.

10. Schneckenpresse nach einem der vorhergehenden Ansprüche, **dadurch gekennzeichnet, dass** an einer freien nach außen orientierten Oberfläche der aktiven wärmebarriere (14) Kühlbleche, Kühlkörper (19) oder ähnliche Vorrichtungen zur Verbesserung mindestens eines konvektiven Wärmeübergangs angeordnet sind.

## Claims

1. Worm extruder (1) comprising a worm cylinder (2) and a worm shaft (3) which is drivable for rotation therein, wherein
the worm cylinder (2) has an inlet opening (6) in an end region for feeding plastic material or mixtures of several plastic materials and/or additives in the form of a bulk material (7) via a feed throat (9),
at least one cooling device (K) is provided in a section of the worm cylinder (2) adjoining the inlet opening (6), **characterized in that** in the region of the feed throat (9) is provided an active heat barrier (14) which comprises electrically controllable means for heat dissipation, the heat barrier (14) comprises a heat insulation (18) which is formed in the shape of a sleeve on an outside of the heat barrier (14).

2. Worm extruder according to claim 1,
**characterized in that** the heat insulation (18) is a ceramic element.

3. Worm extruder according to claim 1 or 2,
**characterized in that** the heat barrier (14) comprises at least one Peltier element (16).

4. Worm extruder according to one of the preceding claims,
**characterized in that** the heat barrier (14) has a layer (17) of good heat conductivity towards a wall of the feed throat (9).

5. Worm extruder according to one of the preceding claims,
**characterized in that** the heat insulation (18) is cylindrical and has on its inside a layer (17) of good heat conductivity.

6. Worm extruder according to claim 4,
**characterized in that** the layer (17) of good heat conductivity consists of copper or evacuated stainless steel.

7. Worm extruder according to one of the preceding claims,
**characterized in that** in a thermal separation groove (13) between the transformation zone (10) and the plasticizing unit (5) of the worm extruder (1) is provided an active heat barrier (14) which comprises electrically controllable means for heat dissipation and in particular at least one Peltier element (16).

8. Worm extruder according to one of the preceding claims,
**characterized in that** the active heat barrier (14), which is arranged in the thermal separation groove (13), comprises a heat insulation (21) on at least one side facing a heat flow (Q) during the operation.

9. Worm extruder according to one of the preceding claims,
**characterized in that** the active heat barrier (14), which is arranged in the thermal separation groove (13), comprises one heat insulation (21) on each of the two longitudinal sides.

10. Worm extruder according to one of the preceding claims,
**characterized in that** cooling sheets, cooling bodies (19) or similar devices are arranged on a free, outwardly oriented surface of the active heat barrier (14) in order to improve at least a convective heat transmission.

## Revendications

1. Extrudeuse à vis (1) comprenant un cylindre d'extrudeuse (2) et un arbre d'extrudeuse (3) pouvant être entraîné en rotation dans celui-ci, le cylindre d'extrudeuse (2) présentant une ouverture d'introduction (6) à une de ses parties d'extrémités pour l'approvisionnement de matière synthétique, ou de mélanges de plusieurs matières synthétiques, et/ou de produits additifs, sous la forme de produits en vrac (7) par l'intermédiaire d'une goulotte d'alimentation (9),
au moins un dispositif de refroidissement (K) étant prévu sur une portion attenante au cylindre d'extrudeuse (2) à l'ouverture d'introduction (6),
**caractérisée en ce**
**qu'**une barrière de chaleur active (14) est prévue dans la zone de la goulotte d'alimentation (9), barrière qui présente des moyens réglables électriquement pour le transport de la chaleur vers l'extérieur et
**que** la barrière de chaleur (14) présente une isolation thermique (18) qui conçue en forme de gaine sur une face externe de la barrière de chaleur (14).

2. Extrudeuse à vis selon la revendication 1 **caractérisée en ce que** l'isolation thermique (18) est conçue sous la forme d'un élément en céramique.

3. Extrudeuse à vis selon les revendications 1 ou 2 **caractérisée en ce que** la barrière de chaleur (14) comprend au moins un élément de Peltier (16).

4. Extrudeuse à vis selon l'une des revendications précédentes **caractérisée en ce que** la barrière de chaleur (14) présente une couche avec une bonne conduction thermique en direction d'une paroi de la goulotte d'alimentation (9).

5. Extrudeuse à vis selon l'une des revendications précédentes **caractérisée en ce que** l'isolation thermique (18) est de forme cylindrique et présente une couche de bonne conduction thermique (17) sur sa face interne.

6. Extrudeuse à vis selon la revendication 4 **caractérisée en ce que** le couche de bonne conduction thermique (17) est constituée de cuivre ou d'acier inoxydable sous vide.

7. Extrudeuse à vis selon l'une des revendications précédentes **caractérisée en ce que**, dans une rainure de séparation (13) thermique entre la zone de transformation (10) et l'unité de plastification (5) de l'extrudeuse à vis (1), une barrière de chaleur active (14) est prévue, qui présente des moyens réglables électriquement pour le transport de la chaleur vers l'extérieur et en particulier au moins un élément de Peltier (16).

8. Extrudeuse à vis selon la revendication précédente **caractérisée en ce que** la barrière de chaleur (14) active attenante à la rainure de séparation (13) thermique, présente une isolation thermique (21) sur au moins une des faces orientées vers un flux thermique (Q) en cours d'utilisation.

9. Extrudeuse à vis selon la revendication précédente **caractérisée en ce que** la barrière de chaleur (14) active attenante à la rainure de séparation (13) thermique présente une isolation thermique (21) sur chacune des deux faces longitudinales.

10. Extrudeuse à vis selon l'une des revendications précédentes **caractérisée en ce que** des tôles de refroidissement, des corps de refroidisssement (9) ou des dispositifs analogues, sont disposés pour l'amélioration d'au moins un transfert de chaleur par convexion sur une des surfaces libres orientée vers l'extérieur de la barrière de chaleur active (14).
